# FASCICULE DE BREVET EUROPEEN

(11) **EP 1 987 896 B1**
(45) Date de publication et mention de la délivrance du brevet: **04.03.2020**
(21) Numéro de dépôt: 08290421.0
(22) Date de dépôt: 05.05.2008
(51) Int. Cl.: B09B 3/00

(54) **Traitement pour stabiliser les REFIOM ou autres déchets industriels analogues**
Aufbereitung zum Stabilisieren von MVA-Abfällen oder anderen ähnlichen Industrieabfällen
Treatment for stabilising APC residue and other similar industrial waste

(30) Priorité: 04.05.2007 FR 0703258
(43) Date de publication de la demande: 05.11.2008
(73) Titulaire: "S.A.G.A.C.E." Services en Administration, Gestion et Applications au Conseil à l'Environnement, 75002 Paris (FR)
(72) Inventeur: Rizet, Laurent, 74250 Viuz en Sallaz (FR); Trouillet, Cyril, 74800 La Roche sur Foron (FR)
(74) Mandataire: Lecomte & Partners

(56) Documents cités:
- EP-A- 0 538 598
- FR-A- 2 754 747
- FR-A- 2 792 856
- FR-A- 2 838 989

## Description

L'invention concerne les traitements des déchets industriels. Plus précisément, les traitements du type considéré sont ceux, de nature hydrométallurgique, permettant la séparation du matériau traité en deux fractions dont l'une est produite sous une forme non nuisible à l'environnement et se trouve de ce fait potentiellement valorisable par recyclage dans l'industrie.

L'invention s'attache plus particulièrement à l'application de ce type de traitement à des déchets industriels spéciaux, tels que les sous-produits d'incinération de combustibles divers, notamment les résidus d'épuration des fumées d'incinération d'ordures ménagères, communément dénommés REFIOM.

On rappelle que le terme "REFIOM" désigne de façon générale les cendres volantes, les cendres sous-chaudières ou les "gâteaux" de filtration générés par l'incinération des ordures ménagères suivie d'une pulvérisation de chaux dans la cheminée à contre-courant des fumées. Ils se présentent généralement sous forme fragmentée ou divisée, en poudre ou granulats. Bien que constitués en majeure partie de substances minérales dépourvues de nocivité, les REFIOM concentrent cependant les éléments polluants contenus dans les déchets incinérés, tels que des métaux lourds (plomb, chrome, cadmium, zinc...) ou des sels (sulfates et chlorures principalement).

Compte tenu de leur teneur élevée en éléments polluants aisément entraînables à l'eau, les REFIOM doivent être enfouis dans des centres de stockage de classe I. Ce stockage contribue à protéger l'environnement, mais supporte un coût récurrent élevé (plus de 200 €/t actuellement en France par exemple), qui se rajoute au coût d'un traitement préalable de stabilisation, alors que paradoxalement ces matières contiennent un potentiel économique certain.

Dans ce but, le document EPA 1 499 458 propose un procédé de traitement hydrométallurgique selon le préambule de la revendication 1 et une installation correspondante suivant le préambule de la revendication 7. Le traitement hydrométallurgique des REFIOM consiste, après les avoir fragmentés au besoin, d'abord à les mouiller à l'eau et les malaxer afin de former une suspension aqueuse que l'on fait mûrir thermiquement, "à tiède" de préférence. Une fois la fraction solide mûrie recueillie, on la lave abondamment à l'eau selon un protocole précis à plusieurs séquences de lavage-séparation solide/liquide répétitives jusqu'à ce qu'elle réponde au niveau d'exigence de non nocivité pour l'environnement qui l'autorise à être stockée en l'état en milieu naturel ou à être valorisée dans diverses industries, en techniques routières notamment.

Depuis la mise au point de ce procédé, les législations ont évolué, comme elles le font sans cesse. C'est le cas en particulier de la législation française, notamment avec son Arrêté du 20 septembre 2002 sur la mise en conformité des usines d'incinération des ordures ménagères (UIOM), dont l'échéance d'application obligatoire a été fixée au 28 décembre 2005.

C'est ainsi que, pour pouvoir répondre à la nouvelle réglementation imposant une diminution des teneurs en polluants atmosphériques rejetés par les UIOM, la quantité de chaux injectée dans les épurateurs de fumées dont sont issus les REFIOM a été augmentée de façon significative.

Cette évolution a engendré une modification de la composition chimique des REFIOM, qui contiennent désormais plus de chaux éteinte Ca(OH)₂ et présentent en conséquence une alcalinité plus élevée qu'auparavant. Dès lors, les traitements connus de dépollution des REFIOM, tel que celui rappelé auparavant, ne donnent plus des résultats entièrement satisfaisants en l'état. L'augmentation de la teneur en chaux, en effet, accroît la quantité de la fraction soluble résiduelle finale, et l'alcalinité des REFIOM n'est pas favorable à une bonne stabilisation des métaux lourds contenus. En outre, on a également pu constater une augmentation du pourcentage de perte massique des REFIOM après traitement.

Le document FR-A-2754747 prévoit justement d'introduire les REFIOM à traiter dans une cuve filtrante de lavages répétitifs à l'eau, dans laquelle on procède également, en fin de lavage, à une neutralisation de la chaux libre contenue dans les REFIOM par carbonatation, par exemple par bouillonnement à l'ozone, à l'air ou au CO₂ de manière à abaisser le pH autour de 7 avant évacuation dans le milieu extérieur de la fraction liquide.

Dans la même ligne, le document FR-A-2792856 prévoit lui aussi une insufflation de CO₂, mais pour neutraliser cette fois une solution sodée venue du traitement des REFIOM par lixiviation, non plus à l'eau, mais à la soude.

Le but de la présente invention est de faire évoluer les traitements des REFIOM afin que ces derniers répondent à nouveau, une fois traités, aux exigences légales leur permettant d'être valorisés, ou sinon stockés dans des décharges de classe III, moins onéreuses que les décharges de classe I auxquelles ils sont destinés à l'origine.

A cet effet, l'invention a pour objet un procédé selon la revendication 1. Des développements du procédé sont selon les revendications dépendantes 2 à 6.

L'agent de neutralisation est du dioxyde de carbone gazeux que l'on fait barboter dans une suspension aqueuse de ladite fraction solide des déchets.

Dans une mise en œuvre préférée, on réalise ladite suspension aqueuse de barbotage en mouillant la fraction solide des déchets avec un rapport liquide / solide en poids de cinq environ.

L'invention a également pour objet une installation selon la revendication 7.

Selon une mise en œuvre préférée de l'invention, les moyens d'injection de gaz de barbotage sont alimentés en gaz par un récupérateur de fumées en provenance directe de la cheminée d'évacuation d'un incinérateur, ce dernier pouvant être avantageusement un incinérateur des ordures ménagères (UIOM).

Comme on l'aura sans doute déjà compris, l'invention consiste pour l'essentiel à procéder, séparément des opérations de lavage elle mêmes, et de préférence avant le premier lavage, à une neutralisation des REFIOM par carbonatation de la chaux contenue afin de les amener à un pH se situant peu au-delà de 9,2.

L'accroissement de la teneur en chaux des REFIOM à traiter a deux conséquences directes. D'une part, une augmentation de leur alcalinité, laquelle nuit à la stabilité des métaux lourds, car ceux-ci sont plus lixiviables en milieu basique. D'autre part, la fraction soluble résiduelle finale est plus importante en quantité, car la chaux se dissout lentement. Une troisième conséquence, moins importante, est l'augmentation du pourcentage de perte massique (mise au mille) entre le REFIOM brut de départ et le REFIOM traité.

L'invention permet de neutraliser la chaux en excès dans les REFIOM, et par conséquent d'en diminuer le pH jusqu'à la valeur souhaitée par ajout d'un agent neutralisant. Mais, il importe de souligner que l'invention procède à cette neutralisation en dehors à la fois de l'étape de mûrissement thermique et de celle du lavage qui suit.

En effet, d'une part, la chaux intervenant dans le mécanisme de stabilisation des REFIOM, il serait nuisible d'effectuer la neutralisation pendant le mûrissement thermique. D'autre part, cette neutralisation, qui a pour objectif de stabiliser la chaux en excès et les traces métalliques résiduelles dans la fraction solide mûrie, doit être effectuée de préférence avant le lavage dont elle améliore l'efficacité, en tous cas séparément du lavage si l'on effectue néanmoins cette neutralisation au cours de la période de lavage.

Un intérêt supplémentaire d'effectuer la neutralisation dans une cuve dédiée autonome, distincte de celle du lavage, tient au fait que les conditions d'application de ce traitement, sa durée en particulier, sont fonction de la teneur initiale en chaux des REFIOM, laquelle est toujours variable. Cette variabilité implique de procéder à des ajustements des réglages des paramètres de la neutralisation en fonction des propriétés des REFIOM entrants.

Cela dit, les tests effectués au niveau du laboratoire ont permis de constater qu'une d'efficacité satisfaisante était obtenue lorsque la neutralisation intervenait après le premier lavage. Toutefois, il est possible de procéder à cette neutralisation après le second lavage, voire au-delà, ce en fonction de la composition des REFIOM, mais toujours de manière séparée des opérations de lavage proprement dites. Il demeure qu'en principe l'efficacité maximale devrait être obtenue lorsque l'on situe la neutralisation avant le lavage, c'est à dire sur la fraction solide juste mûrie.

L'agent neutralisant est du gaz carbonique pouvant réagir avec la chaux éteinte (Ca(OH)₂), et le produit de cette réaction présente une alcalinité moins élevée que la chaux de départ.

Si la neutralisation se fait par adjonction d'acide chlorhydrique, les quantités à employer sont assez importantes: de l'ordre de 700 1 d'HCl à 37 % pour une tonne de REFIOM. Sa manipulation est délicate en raison notamment du dégagement de vapeur très important qui résulte de la réaction, ainsi que de l'augmentation significative de la température du bain. La réaction de neutralisation de la chaux éteinte par l'acide chlorhydrique peut s'exprimer de la manière suivante :

Ca(OH)₂ + 2 HCl → CaCl₂ + 4 H₂O

On notera que si un tel agent neutralisant donne de bons résultats d'un point de vue de l'abaissement recherché du pH, il conduit cependant à une perte de masse du REFIOM pouvant aller jusqu'à 55 %. Une telle mise au mille n'est guère satisfaisante dans l'optique d'une valorisation ultérieure des déchets lavés.

L'agent de neutralisation est ainsi du dioxyde de carbone.

La neutralisation au dioxyde de carbone est efficace pour tous les polluants concernés. De surcroît, il forme avec la chaux du carbonate de calcium qui précipite comme on peut le voir avec la réaction suivante :

Ca(OH)₂ + CO₂ → CaCO₃ + H₂O

De ce fait, la perte en masse du REFIOM durant le traitement est bien moins importante et se situe entre 20 et 30 %. De plus, les eaux utilisées durant l'opération de neutralisation sont moins chargées en éléments polluants qu'il faudra traiter par la suite.

Par rapport aux autres acides, le dioxyde de carbone est d'un emploi beaucoup plus aisé. Etant gazeux à l'état naturel, il peut avantageusement être introduit par simple bullage dans la pulpe brassée en continu au travers d'injecteurs montés dans le fond de la cuve de neutralisation.

La neutralisation par bullage CO₂ présente par ailleurs des avantages économiques et écologiques notables qui en font l'agent de neutralisation préféré selon l'invention. Pour donner un ordre d'idée, pour le traitement d'une tonne de REFIOM, on devra avoir recours à environ 100 kg de CO₂.

Ce dosage va varier, on le comprendra sans peine, en fonction de l'alcalinité d'origine du REFIOM. Ainsi, pour peu que l'unité de dépollution des REFIOM soit installée sur le site d'une usine d'incinération des déchets, voire celle-là même qui produit les REFIOM à traiter, le CO₂ utilisé pour la neutralisation des REFIOM peut parfaitement provenir des fumées épurées prêtes à être relâchées dans l'atmosphère mais encore riches en CO₂. On voit là l'avantage à tirer d'une telle installation qui va permettre, outre une dépollution des REFIOM, d'épurer plus encore les fumées relâchées dans l'atmosphère en diminuant leur teneur en dioxyde de carbone, dont on connaît la sensibilité de la communauté internationale soucieuse du dérèglement climatique dû aux lâchers atmosphériques de gaz à effet de serre.

D'une manière générale, l'objectif est d'atteindre un pH de 9, voire moins encore, au terme de l'étape de neutralisation. Ce pH correspond en effet au minimum de solubilité des métaux lourds, et donc à leur stabilité.

Il est à noter toutefois qu'il peut s'avérer difficile de maintenir un pH si peu basique jusqu'à la fin de l'étape de lavage, car durant les lavages successifs qui suivent la neutralisation, la chaux va continuer à se dissoudre et donc à faire monter le pH. Autrement dit, on ne peut exclure de devoir faire appel à des séquences de barbotage au CO₂ répétitives en alternance avec les séquences de lavage, mais toujours de manière séparée, donc dans des cuves distinctes.

A noter que l'on connaît déjà, par le document publié WO 98/56464 un traitement des REFIOM au gaz carbonique agissant sur du soluté riche en métaux lourds dissous après séparation de la fraction solide, afin d'en diminuer le pH et favoriser ainsi une précipitation de ceux-ci.

Selon l'invention par contre, le dioxyde de carbone agit sur le REFIOM lui-même (donc sur la fraction solide) pour diminuer son pH interne et stabiliser les métaux lourds en son sein. Le gaz carbonique contribue ici à la stabilisation du REFIOM qui ne larguera plus ou très faiblement de métaux lourds par lixiviation.

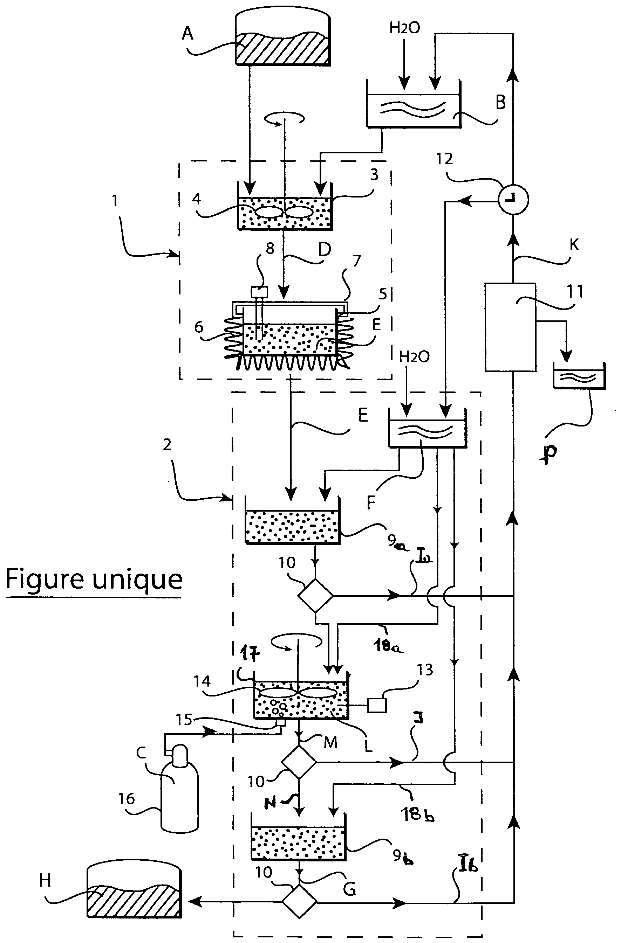

L'invention sera bien comprise et d'autres aspects et avantages ressortiront plus clairement au vu de la description qui suit d'un exemple de réalisation en référence à la figure unique annexée montrant le schéma fonctionnel du traitement des déchets.

Par rapport à l'art antérieur cité ci-avant, il est utile de préciser que le procédé utilisé dans l'exemple chiffré donné ci-après utilise moins d'eau, des durées de contact liquide/solide plus courtes durant les phases de lavage, car il est ajouté du carbonate de sodium pour aider à la solubilisation des sulfates au moment de l'étape de maturation thermique.

Du REFIOM A est introduit sous forme divisée dans un bac mélangeur 3 doté de moyens de brassage 4 au sein d'une unité de pulpage 1 comprenant par ailleurs une cuve autoclave 5. Il y est malaxé avec de l'eau claire en faible quantité pour former une suspension aqueuse, ou pulpe, D. A cet égard, l'eau est ajoutée dans un rapport pondéral liquide /solide de deux environ, mais qui peut aller bien au delà (jusqu'à cinq par exemple) en fonction de la nature du REFIOM à traiter.

Parallèlement, du carbonate de sodium Na₂CO₃ est avantageusement ajouté en cuve 3 à raison de 25 % en poids de ce réactif rapporté à la masse brute (MB) de REFIOM à traiter.

Une fois formée, la suspension fraîche D contenant le Na₂CO₃ est dirigée vers une cuve autoclave de mûrissement thermique 5.

Celle-ci présente une paroi métallique chauffante par résistance électrique 6 et est fermée par un couvercle hermétique 7 pour éviter la déperdition de liquide par évaporation. De manière connue, cette cuve est dotée d'une cellule de mesure 8 qui suit en permanence la conductance électrique de la suspension dans la cuve 5 afin de la comparer avec une valeur de consigne prédéterminée représentative de la conductance d'une suspension de référence mûrie. L'opérateur sera alors à même de conduire l'étape de mûrissement à son terme autrement que par la méthode empirique qui consiste, pour une température donnée, d'en fixer la durée.

On notera à cet égard que ce traitement thermique est mené avantageusement au voisinage de la température d'ébullition de la suspension sous pression atmosphérique standard (90°C par exemple), donc "à tiède" selon le vocable usité, pendant dans ce cas une durée comprise entre 16 et 24 heures.

Au terme de cette étape de mûrissement thermique, la suspension mûrie E est dirigée vers une unité de lavage 2.

Il est à noter que le carbonate de sodium peut, de manière alternative, être ajouté après le mûrissement thermique de la suspension, mais il ne s'agit là d'un mode opératoire alternatif, la préférence étant l'ajout du réactif à la suspension fraîche. Cette opération n'est pas représentée sur la figure.

L'unité comprend un bac de lavage 9 en fonctionnement séquentiel cadencé sur la séquence de lavages, ou de préférence une batterie de plusieurs bacs successifs (deux bacs 9a et 9b sur la figure) montés en série, éventuellement en fonctionnement continu, et dont chacun sera alors affecté à un lavage déterminé dans la séquence considérée. Chaque bac de lavage est doté en sortie d'un séparateur liquide/solide 10. Cette séparation peut se faire par centrifugation, par filtre-presse, ou par tout autre moyen adéquat. Chaque bac est approvisionné avec une solution de lavage F, qui peut-être simplement de l'eau.

De préférence, le rapport liquide/solide cumulé lors des opérations successives de lavage n'excédera pas 50 en poids. Toutefois, il peut être procédé au lavage de différentes façons.

On peut par exemple effectuer cinq lavages successifs avec un rapport liquide/solide en poids de 5 ou bien quatre lavages successifs avec un rapport liquide/solide en poids de 10, ou tout autre panachage, à condition de garder le principe d'une séquence de lavages répétitifs.

La durée de contact solution de lavage / REFIOM est de l'ordre de 2 à 3 heures pour chaque séquence de lavage.

Après le premier lavage par apport d'eau 18a dans le bac 9a, le REFIOM est mouillé à nouveau, par l'apport d'eau 18b, dans le second bac de lavage 9b de façon à reformer une suspension aqueuse (ou pulpe également), ce avec un rapport liquide/solide de préférence voisin de 5.

Selon une mise en oeuvre de l'invention, entre ces deux lavages successifs a lieu une opération de neutralisation, séparée de ces derniers.

Durant cette étape de neutralisation, qui va se dérouler en fait dans une seconde cuve de pulpage, ou cuve de repulpage 17 dédiée à cette fonction, et qui va durer environ 2 heures, un agent abaissant le pH est introduit dans la cuve en question en même temps que l'eau de pulpage.

L'oxyde de carbone, CO₂, à l'état gazeux, est introduit par bullage dans la pulpe par des injecteurs montés à cet effet au travers du fond de la cuve 17.

Le gaz injecté, riche en CO₂, sera avantageusement de la fumée produite par l'incinération d'ordures ménagères. Cette fumée est d'abord traitée par passage dans un épurateur de fumée dont le résidu récupéré constitue du REFIOM.

Une fois nettoyée, par passage dans un filtre à manches par exemple, cette fumée reste encore riche en CO₂. Elle peut donc être utilement récupérée avant son largage à l'atmosphère et redirigée vers l'unité de dépollution du REFIOM. Sur la figure, la source de CO₂ est symbolisée par une bouteille de gaz 16.

Cette cuve de repulpage 17 est donc équipée en sa partie inférieure de moyens d'injection 15 de gaz de bullage et de moyens de brassage 14 afin de permettre une action optimale du CO₂ dans toute la pulpe.

La cuve 17 peut également être équipée de moyens de récupération des gaz non représentés.

Un détecteur, mesurant la quantité de CO₂ encore présente dans les fumées, peut être installé à ce niveau afin de recycler les fumées en cuve de pulpage 17 si leur teneur en CO₂ est encore suffisamment élevée pour parvenir à neutraliser efficacement la chaux résiduelle contenue dans la pulpe, ou les rediriger vers l'atmosphère dans le cas contraire.

La cuve de repulpage 17 est en outre équipée d'un capteur 13 permettant de mesurer le pH en continu de la pulpe durant l'étape de neutralisation.

Lorsque l'étape de neutralisation va débuter, ce pH se situera aux alentours de 12,6,qui est la valeur du pH tampon de la chaux.

L'étape de neutralisation sera considérée comme achevée lorsque le pH sera descendu de 3,5 points environ, pour atteindre, en tous cas, une valeur égale ou inférieure à 9,2.

La pulpe neutralisée M subit une séparation solide/liquide 10. La fraction liquide J, tout comme la fraction liquide la issue du premier lavage en cuve 9a et de son homologue Ib issue du second lavage en cuve 9b, sont dirigées vers l'unité 11 de traitement des eaux de lavage, et la fraction solide N est introduite dans la seconde cuve de lavage 9b (ou recirculée dans la cuve 19a si les lavages successifs se font dans la même cuve).

Les lavages suivants se font de la même façon que le premier lavage décrit ci-avant.

Une séparation liquide/solide finale 10 de la suspension G obtenue au terme de l'opération de lavages permet d'extraire la fraction solide inertée H en vue de sa valorisation en tant que fine de mâchefer de catégorie V, applicable en technique routières par exemple.

De manière connue, les fractions liquides collectées la, J et Ib seront avantageusement conditionnées en une saumure P au moyen d'une unité de désalinisation 11.

Cette unité peut-être constituée d'un équipement CMV (Compression Mécanique de Vapeur) du commerce comprenant à sa suite un évaporateur sous vide ou de membranes de nanofiltration par exemple.

L'eau purifiée recueillie K peut être avantageusement redirigée par des moyens de pompage 12 vers l'unité de pulpage 1 ou vers l'unité de lavage 2.

La saumure P peut, quant à elle, être éventuellement valorisée comme fondant routier après épuration, ou traitée selon les techniques connues de stabilisation/ consolidation des REFIOM aux liants hydrauliques et aux polysulfures en vue de son stockage en tant que déchet.

Deux échantillons ont été traités avec le procédé selon l'invention en rajoutant 25 % en poids de carbonate de sodium sur masse brute de REFIOM.

Pour l'échantillon R1, la neutralisation par bullage au CO₂ dans la cuve de repulpage 17 a été effectuée après un second deuxième lavage et pour l'échantillon R2 après un premier lavage.

L'exemple chiffré consigné dans le tableau ci-après donne les quantités relarguées par la fraction solide H récupérée en fin de traitement, exprimées en mg/kg de matière sèche pour un rapport pondéral liquide/solide de dix déterminé par application du test de lixiviation NF EN 12457-3.

Les résultats sont à comparer avec les valeurs données en dernière colonne. Il s'agit en effet des valeurs limites applicables pour les déchets admissibles dans les centres de stockage de classe III selon la décision n° 2003/33/CF du 19 décembre 2002.

### Exemple 1

| Référence de l'essai | **R1** | **R2** | |
|---|---|---|---|
| **Traitement thermique** | 22 h à ébullition L/S = 2 | | |
| Na₂CO₃ ajouté(kg/t de MB) | 250 | 250 | |
| **Lavage** | 2 lavages avec L/S =5 pendant 2 h | 1 lavage avec L/S = 5 pendant 2 h | Seuils Classe III |
| **Neutralisation** | Au CO₂, L/S = 10* pendant 2 h | Au CO₂, L/S = 10* pendant 2 h | |
| **Lavage post neutralisation** | 2 lavages à L/S = 5 pendant 2 h | 3 lavages à L/S = 5 pendant 2 h | |
| Arsenic | - | < 0,1 | **0,5** |
| Barium | - | < 2 | **20** |
| Cadmium | - | < 0,01 | **0,04** |
| Chrome | 0,4 | 0,5 | **0,5** |
| Cuivre | - | < 0,5 | **2** |
| Nickel | - | < 0,08 | **0,4** |
| Plomb | 0,9 | 0,5 | **0,5** |
| Zinc | 1,8 | <0,5 | **4** |
| Chlorures | <500 | 70 | **800** |
| Sulfates | <500 | 240 | **1000** |
| Fraction soluble | - | 2780 | **4000** |
| Référence de l'essai | **R1** | **R2** | |
| pH | 10,7 | 10,2 | - |
| * le rapport L/S de 5 n'a pas pu être respecté lors des essais en laboratoires en raison des dispositifs utilisés. | | | |

Lorsque la neutralisation se fait après le premier lavage, elle est plus efficace notamment pour les valeurs en plomb et en zinc que lorsqu'elle se fait après le deuxième lavage. C'est pourquoi cette variante est la variante préférée de l'invention.

Si un pH de 9,2 est bien atteint à la fin de l'étape de neutralisation, il peut s'avérer difficile de le maintenir à cette valeur jusqu'à la fin du procédé, car durant le ou les lavages successifs postérieurs à la neutralisation, la chaux des REFIOM va continuer à se dissoudre et à tendre donc à faire monter le pH.

Dans une variante du procédé, les REFIOM subissent d'abord un prélavage de déchloruration avant l'étape de maturation thermique de la pulpe. Un tel prélavage permet en outre d'ajouter moins de carbonate de sodium au moment de l'étape de maturation. A cet effet, les REFIOM A sont introduits sous forme divisée dans un bac de prélavage (non représenté sur la figure) disposé en amont de l'unité de traitement 1.

Ils y sont mélangés, deux heures durant environ, avec une solution aqueuse, avantageusement de l'eau claire, dans un rapport liquide/solide en poids de 10. Le bac de prélavage est doté en sa sortie d'un séparateur liquide/solide permettant de séparer les REFIOM prélavés du liquide de lavage chargé en chlorures.

Les REFIOM prélavés sont alors introduits dans l'unité de traitement proprement dite pour y subir les opérations de pulpage, de mûrissement, de lavage et de neutralisation décrites auparavant.

Deux échantillons R3 et R4 ont été traités avec le procédé selon l'invention. Les échantillons proviennent du même REFIOM. Pour R3 on a ajouté 25 % de carbonate de sodium, et pour R4 on a ajouté 14 % de carbonate de sodium, mais les déchets ont subi un prélavage.

L'exemple chiffré ci dessous donne les quantités relarguées par la fraction solide H récupérée en fin de procédé, exprimées en mg/kg de matière sèche pour un rapport liquide/solide de dix environ déterminé par application du test de lixiviation NF EN 12457-3.

Les résultats sont à comparer avec les valeurs données en dernière colonne. Il s'agit en effet des valeurs limites applicables pour les déchets admissibles dans les centres de stockage de classe III selon la décision n° 2003/33/CF du 19 décembre 2002.

### Exemple 2

| Référence de l'essai | **R3** | **R4** | |
|---|---|---|---|
| **Prélavage** | - | L/S = 10 pendant 2 h | |
| **Traitement thermique** | 22 h. à ébullition L/S = 2 | | |
| Na₂CO₃ ajouté (en kg/t de MB) | 250 | 140 | |
| **Lavage** | L/S = 5 pendant 2 h | L/S = 5 pendant 2 h | Seuils Classe III |
| **Neutralisation** | Au CO₂ à L/S = 10* pendant 2 h | Au CO₂ à L/S = 10* pendant 2 h | |
| **Lavage post neutralisation** | 3 lavages à L/S = 5 pendant 2 h | 3 lavages à L/S = 5 pendant 2 h | |
| **Perte massique en %** | 17,7 | 37,9 | |
| Arsenic | - | - | **0,5** |
| Barium | - | - | **20** |
| Cadmium | - | - | **0,04** |
| Chrome | 0,3 | 0,5 | **0,5** |
| Cuivre | < 0,5 | < 0,5 | **2** |
| Nickel | - | - | **0,4** |
| Plomb | 0,2 | 0,2 | **0,5** |
| Zinc | < 0,5 | < 0,5 | **4** |
| Chlorures | 75 | 60 | **800** |
| Sulfates | 520 | 670 | **1000** |
| Fraction soluble | 4000 | 1800 | **4000** |
| pH | 11,2 | 10,9 | - |
| * le rapport L/S de 5 n'a pas pu être respecté lors des essais en laboratoires en raison des dispositifs utilisés. | | | |

Sans le prélavage, la perte en masse est moins importante. Ceci est dû au fait que les chlorures sont lixiviés avant le traitement thermique.

Le procédé selon l'invention, dans ses deux variantes, est satisfaisant puisqu'il permet d'aboutir à des résidus traités ayant une fraction lixiviable très faiblement polluante, proche de celle des déchets dit inertes.

Comme déjà souligné, l'invention trouve une application privilégiée dans le domaine du traitement des REFIOM, pour lequel elle a d'ailleurs été conçue. Elle reste cependant applicable à tous les résidus de procédé thermiques contenant des métaux lourds en milieu alcalin qui les rendent non stabilisés ou évolutifs en l'état, donc lixiviables naturellement.

Il va de soi que l'invention ne se limite pas aux exemples de réalisation décrits ci-avant, mais s'étend à de multiples variantes ou équivalents dans la mesure où est respectée sa définition qu'en donnent les revendications jointes.

## Revendications

1. Procédé de traitement hydrométallurgique en milieu aqueux des déchets industriels contenant des métaux lourds et des sels, tels que des REFIOM (A), selon lequel les déchets étant approvisionnés sous forme divisée, on les conditionne en une suspension aqueuse que l'on fait mûrir thermiquement avant de recueillir une suspension mûrie (E) que l'on soumet à un lavage à l'eau mené par des opérations répétitives de lavage-séparation solide/liquide répétitives jusqu'à ce que la fraction solide de ladite suspension mûrie réponde à un niveau d'exigence voulu de non-nocivité pour l'environnement,
procédé **caractérisé en ce que,**
après mûrissement thermique de la suspension aqueuse, on effectue une étape séparée de neutralisation de la fraction solide de la suspension mûrie en la traitant par un agent chimique permettant d'abaisser son pH, ledit agent étant du dioxyde de carbone à l'état gazeux.

2. Procédé selon la revendication 1, **caractérisé en ce que** l'on effectue ladite étape séparée de neutralisation avant le lavage à l'eau.

3. Procédé selon la revendication 1, **caractérisé en ce que** l'on effectue ladite étape séparée de neutralisation entre deux opérations de lavage successives.

4. Procédé selon la revendication 3, **caractérisé en ce que** l'on effectue l'étape de neutralisation après la première opération de lavage.

5. Procédé selon la revendication 1, **caractérisé en ce que** ledit pH est abaissé jusqu'à une valeur de 9.

6. Procédé selon la revendication 1 ou la revendication 5, **caractérisé en ce que** l'on mène ladite opération de neutralisation en mouillant la fraction solide avec un rapport liquide/solide de cinq.

7. Installation de traitement pour la mise en œuvre du procédé selon la revendication 1 comprenant une unité de pulpage (1) pourvue d'un bac de mouillage (3) doté de moyens de brassage (4) et d'une cuve de mûrissement (5) dotée de moyens de chauffage (6), suivie, dans le sens chronologique du traitement, par une unité de lavage (2) comprenant au moins un bac de lavage (9a, 9b), dans laquelle ladite unité de lavage (2) est pourvue également d'une cuve de neutralisation autonome (17) équipée de moyens (15) d'introduction de matière ajoutée reliés à une source (16) d'alimentation en agent abaisseur du pH, **caractérisée en ce que** la cuve de neutralisation autonome (17) est équipée de moyens de brassage (14) et que lesdits moyens d'introduction (15) sont constitués par des moyens d'injection d'un gaz de bullage montés au travers du fond de la cuve de neutralisation (17), ledit gaz étant du dioxyde de carbone.

8. Installation selon la revendication 7 **caractérisée en ce que** lesdits moyens d'injection de gaz sont reliés à une source d'alimentation en gaz constitué par un récupérateur de fumées en provenance de la cheminée d'un incinérateur.

## Patentansprüche

1. Verfahren zur hydrometallurgischen Behandlung von schwermetall- und salzhaltigen Industrieabfällen, wie Rückstände aus der Reinigung der Abluft aus Verbrennungsanlagen für Haushaltsmüll (A), in einem wässrigen Medium, bei dem die Abfälle in getrennter Form zugeführt werden, sie zu einer wässrigen Suspension aufbereitet werden, die thermisch ausgehärtet wird, bevor eine ausgehärtete Suspension (E) aufgesammelt wird, die einem Waschen mit Wasser durch wiederholte Fest/Flüssig-Wasch-Trennungsvorgänge unterzogen wird, bis der Feststoffanteil der ausgehärteten Suspension einen gewünschten Grad an Umweltfreundlichkeit erreicht,
Verfahren, **dadurch gekennzeichnet,**
**dass** nach der thermischen Reifung der wässrigen Suspension ein separater Schritt der Neutralisierung des festen Anteils der gereiften Suspension durch Behandlung mit einem chemischen Mittel zur Senkung des pH-Wertes durchgeführt wird, wobei dieses Mittel Kohlendioxid in gasförmigem Zustand ist.

2. Verfahren nach Anspruch 1, **dadurch gekennzeichnet, dass** der separate Neutralisationsschritt vor dem Waschen mit Wasser durchgeführt wird.

3. Verfahren nach Anspruch 1, **dadurch gekennzeichnet, dass** der getrennte Neutralisationsschritt zwischen zwei aufeinanderfolgenden Waschvorgängen durchgeführt wird.

4. Verfahren nach Anspruch 3, **dadurch gekennzeichnet, dass** der Neutralisationsschritt nach dem ersten Waschvorgang durchgeführt wird.

5. Verfahren nach Anspruch 1, **dadurch gekennzeichnet, dass** der pH-Wert auf einen Wert von 9 abgesenkt wird.

6. Verfahren nach Anspruch 1 oder Anspruch 5, **dadurch gekennzeichnet, dass** der genannte Neutralisationsvorgang durch Befeuchtung des festen Anteils mit einem Flüssigkeit/Feststoff-Verhältnis von fünf durchgeführt wird.

7. Behandlungsanlage zum Ausführen des Verfahrens nach Anspruch 1, umfassend eine Markeinheit (1), die mit einem mit Rührelementen (4) versehenen Befeuchtungsbehälter (3) und einem mit Heizelementen (6) versehenen Reifebehälter (5) versehen ist, gefolgt in der zeitlichen Richtung der Behandlung von einer Wascheinheit (2), die mindestens einen Waschbehälter (9a, 9b) umfasst, wobei diese
Wascheinheit (2) auch mit einem unabhängigen Neutralisationsbehälter (17) versehen ist, der mit Einführ-Elementen (15) von zugesetzten Stoffen versehen ist, die mit einer Quelle (16) zur Versorgung mit einem pH-Senker verbunden sind, **dadurch gekennzeichnet, dass** der unabhängige Neutralisationsbehälter (17) mit Rührelementen (14) versehen ist und dass die Einführ-Elemente (15) aus Elementen zum Einblasen eines sprudelnden Gases bestehen, die durch den Boden des Neutralisationsbehälters (17) hindurch angebracht sind, wobei das Gas Kohlendioxid ist.

8. Anlage nach Anspruch 7 , **dadurch gekennzeichnet, dass** die Elemente zum Einblasen des Gases an eine Gasversorgungsquelle angeschlossen sind, die aus einem Rekuperator für die aus dem Schornstein einer Verbrennungsanlage kommenden Rauchgase besteht.

## Claims

1. Process for the hydrometallurgical treatment in an aqueous medium of industrial waste containing heavy metals and salts, such as REFIOM (A), according to which the waste is supplied in divided form, is conditioned into an aqueous suspension which is thermally cured before collecting a cured suspension (E) which is subjected to washing with water by repetitive solid/liquid washing-separation operations until the solid fraction of said cured suspension meets a desired level of environmental friendliness,
said process **characterised in that,**
after thermal curing of the aqueous suspension, a separate step of neutralising the solid fraction of the cured suspension is carried out by treating it with a chemical agent for lowering its pH, said agent being carbon dioxide in the gaseous state.

2. Process according to claim 1, **characterised in that** said separate neutralisation step is carried out before washing with water.

3. Process according to claim 1, **characterised in that** said separate neutralisation step is carried out between two successive washing operations.

4. Process according to claim 3, **characterised in that** the neutralisation step is carried out after the first washing operation.

5. Process according to claim 1, **characterised in that** said pH is lowered to a value of 9.

6. Process according to claim 1 or claim 5, **characterised in that** said neutralisation operation is carried out by wetting the solid fraction with a liquid/solid ratio of five.

7. Installation of a treatment for carrying out the process according to claim 1 comprising a pulper unit (1) provided with a wetting tank (3) supplied with stirring means (4) and a curing tank (5) supplied with heating means (6), followed, in the chronological direction of the treatment, by a washing unit (2) comprising at least one washing tank (9a, 9b), in which said washing unit (2) is also provided with a self-contained neutralisation tank (17) equipped with means (15) for introducing added matter connected to a source (16) for supplying a pH-lowering agent, **characterised in that** the self-contained neutralisation tank (17) is equipped with stirring means (14) and **in that** said introduction means (15) consist of bubbling gas injection means mounted through the bottom of the neutralisation tank (17), said gas being carbon dioxide.

8. Installation according to claim 7 **characterised in that** said gas injection means are connected to a gas supply source consisting of a fume recovery unit coming from the chimney of an incinerator.
